(19) Europäisches Patentamt
European Patent Office
Office européen des brevets

(11) **EP 2 818 955 B1**

(12) **EUROPÄISCHE PATENTSCHRIFT**

(45) Veröffentlichungstag und Bekanntmachung des Hinweises auf die Patenterteilung:
**05.08.2020 Patentblatt 2020/32**

(51) Int Cl.:
*G05D 1/02* (2020.01)          *G05D 1/00* (2006.01)
*G01C 21/34* (2006.01)          *G06Q 10/04* (2012.01)

(21) Anmeldenummer: **14164735.4**

(22) Anmeldetag: **15.04.2014**

(54) **Verfahren zum Betreiben eines fahrerlosen Transportfahrzeugs und entsprechendes fahrerlose Transportfahrzeug**

Method for operating a driverless transport vehicle and associated driverless transport vehicle

Procédé de commande d'un véhicule de transport sans conducteur et véhicule de transport sans conducteur correspondant

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2013 DE 102013207895**

(43) Veröffentlichungstag der Anmeldung:
**31.12.2014 Patentblatt 2015/01**

(73) Patentinhaber: **KUKA Deutschland GmbH**
**86165 Augsburg (DE)**

(72) Erfinder:
• **Meyer-Delius, Daniel**
**81541 München (DE)**
• **Pfaff, Patrick**
**86163 Augsburg (DE)**
• **Loibl, Stefan**
**86477 Adelsried (DE)**

(74) Vertreter: **Böss, Dieter Alexander et al**
**Schirmgasse 268**
**84028 Landshut (DE)**

(56) Entgegenhaltungen:
**EP-A1- 1 895 720      EP-A1- 2 169 502**
**EP-A1- 2 172 825**

• **GRAGLIA P ET AL: "PLANNING MINIMUM TIME TRAJECTORY IN THE TRAVERSABILITY SPACE OF A ROBOT", PROCEEDINGS OF THE INTERNATIONAL SYMPOSIUM ON INTELLIGENT CONTROL. PHILADELPHIA, JAN. 19 - 20, 1987; [PROCEEDINGS OF THE INTERNATIONAL SYMPOSIUM ON INTELLIGENT CONTROL], WASHINGTON, IEEE COMPUTER SOC. PRESS, US, Bd. SYMP. 2, Nr. 1987, 19. Januar 1987 (1987-01-19), Seiten 82-87, XP000012636,**

**Beschreibung**

Die Erfindung betrifft ein fahrerloses Transportfahrzeug, ein System mit einem Rechner und einem fahrerlosen Transportfahrzeug und ein Verfahren zum Betreiben eines fahrerlosen Transportfahrzeugs

Ein fahrerloses Transportfahrzeug (Englisch: Automated Guided Vehicle (AGV)) ist ein flurgebundenes Fördermittel mit einem eigenen Antrieb, das automatisch gesteuert und berührungslos geführt wird. Fahrerlose Transportfahrzeuge fahren automatisch von einem Startpunkt zu einem Zielpunkt.

Die EP 2 169 502 A1 offenbart ein Verfahren zum Bewegen eines autonomen Fahrzeugs aufgrund von Kanten zugeordneten Kostenfunktionen, wobei die Kanten möglichen Strecken zugeordnet sind, entlang derer das autonome Fahrzeug fahren kann.

P. Graglia, et al offenbaren in "Planning Minimum Time Trajectory in the Traversability Space of a Robot", Proceedings of the IEEE International Symposium on Intelligent Control, IEEE Computer Soc. Press, Bd. Symp. 2, Nr. 1987, 19. Januar 1987, Seiten 82-87, Washington, USA, ein Verfahren zum Betreiben eines mobilen Roboters. Die Strecke, entlang sich der mobile Roboter bewegen soll, wird mit Hilfe eines sogenannten Befahrbarkeits-Raumes geplant.

Die EP 2 172 825 A1 beschreibt eine Vorrichtung zur Routenplanung und ein zugehöriges Verfahren, sowie eine Vorrichtung zur Kostenbewertung und einen mobilen Körper.

Die EP 1 895 720 A1 beschreibt ein computerimplementiertes Verfahren zum Auffinden eines optimierten Pfades von einem Ausgangsort zu einem Zielpunkt.

Aufgabe der Erfindung ist es, Voraussetzungen dafür zu schaffen, dass ein fahrerloses Transportfahrzeug schneller von seinem Startpunkt zu seinem Zielpunkt fährt.

Die Aufgabe der Erfindung wird gelöst durch ein Verfahren zum Betreiben eines fahrerlosen Transportfahrzeugs innerhalb einer Umgebung, das eingerichtet ist, automatisch von einem Startpunkt zu einem Zielpunkt zu fahren, wobei die Umgebung Zwischenpunkte und die Zwischenpunkte, den Startpunkt und den Zielpunkt verbindende Streckenabschnitte umfasst, aufweisend folgende Verfahrensschritte:

a) Bereitstellen eines der Umgebung zugeordneten Graphen, der den Zwischenpunkten zugeordnete Knoten, einen dem Startpunkt zugeordneten Startknoten, einen dem Zielpunkt zugeordneten Zielknoten und den Startknoten, den Zielknoten und die Knoten verbindende, den entsprechenden Streckenabschnitten zugeordnete Kanten umfasst, wobei den Kanten jeweils eine Information über die Passierbarkeit zugeordnet ist, ob zu einer bestimmten Zeit der entsprechende Streckenabschnitt befahrbar ist, und die Fahrdauer, die das fahrerlose Transportfahrzeug braucht, den entsprechenden befahrbaren Streckenabschnitt zu durchfahren,

b) basierend auf den den Kanten zugeordneten Informationen und dem aktuellen Zeitpunkt am Startpunkt, Berechnen einer Strategie entlang welcher Streckenabschnitte dem fahrerlosen Transportfahrzeug das schnellstmögliche automatische Fahren zum Zielpunkt erlaubt ist, wobei die Strategie eine Information über errechnete potenzielle Ankunftszeiten an den entsprechenden Zwischenpunkten und dem Zielpunkt umfasst,

c) basierend auf der Strategie, automatisches Fahren des fahrerlosen Transportfahrzeugs vom Startpunkt zum entsprechenden, dem Startpunkt benachbarten Zwischenpunkt entlang des entsprechenden Streckenabschnitts,

d) basierend auf der aktuellen Ankunftszeit an dem dem Startpunkt benachbarten Zwischenpunkt und basierend auf der Strategie, automatisches Fahren des fahrerlosen Transportfahrzeugs entlang des entsprechenden Streckenabschnitts zum nächsten Zwischenpunkt entlang des entsprechenden Streckenabschnitts,

e) basierend auf der aktuellen Ankunftszeit an dem nächsten Zwischenpunkt und basierend auf der Strategie, automatisches Fahren des fahrerlosen Transportfahrzeugs zum Zwischenpunkt, der dem nächsten Zwischenpunkt folgt, und

f) Wiederholen der Schritte d) und e) bis das fahrerlose Transportfahrzeug am Zielpunkt ankommt, wobei

für die einzelnen Streckenabschnitte zu erwartende Fahrdauern berechnet werden, welche als Wahrscheinlichkeitsverteilung der Ankunftszeiten $P(Y_t)$ am nächsten Zwischenpunkt gemäß folgender Formel berechnet werden:

$$P(Y_t) = \sum_{x \in \{0,1\}} P(X_t = x)P(Y_t \mid X_t = x)$$

wobei $P(X_t)$ die Wahrscheinlichkeitsverteilung der Passierbarkeit des der entsprechenden Kante zugeordneten Streckenabschnitts und $P(Y_t | X_t)$ die bedingte Wahrscheinlichkeit der Ankunftszeit des der entsprechenden Kante zugeordneten Streckenabschnitts in Abhängigkeit der Passierbarkeit ist.

Das fahrerlose Transportfahrzeug kann z.B. die gewünschten Streckenabschnitte bzw. Zwischenpunkte selber ermitteln. Ein weiterer Aspekt der Erfindung betrifft demnach ein fahrerloses Transportfahrzeug, aufweisend einen Fahrzeuggrundkörper, mehrere, drehbar relativ zum Fahrzeuggrundkörper gelagerte Räder zum Bewegen des fahrerlosen Transportfahrzeugs, wenigstens einen mit wenigstens einem der Räder gekoppelten Antrieb zum Antreiben des entsprechenden Rades und eine mit dem wenigstens einen Antrieb gekoppelte Steuervorrichtung, wobei das fahrerlose Transportfahrzeug eingerichtet ist, gesteuert durch seine Steuervorrichtung automatisch innerhalb einer Umgebung von einem Startpunkt zu einem Zielpunkt zu fahren, wobei die Umgebung Zwischenpunkte und die Zwischenpunkte, den Startpunkt und den Zielpunkt verbindende Streckenabschnitte umfasst und die Steuervorrichtung eingerichtet ist, eine Strategie gemäß dem erfindungsgemäßen Verfahren zu berechnen, gemäß derer das fahrerlose Transportfahrzeug vom Startpunkt zum Zielpunkt automatisch fährt.

Die gewünschten Streckenabschnitte bzw. Zwischenpunkte können z.B. von einem externen Rechner ermittelt werden. Ein weiterer Aspekt der Erfindung betrifft daher ein System, aufweisend

- ein fahrerloses Transportfahrzeug, das einen Fahrzeuggrundkörper, mehrere, drehbar relativ zum Fahrzeuggrundkörper gelagerte Räder zum Bewegen des fahrerlosen Transportfahrzeugs, wenigstens einen mit wenigstens einem der Räder gekoppelten Antrieb zum Antreiben des entsprechenden Rades und eine mit dem wenigstens einen Antrieb gekoppelte Steuervorrichtung aufweist, wobei das fahrerlose Transportfahrzeug eingerichtet ist, gesteuert durch seine Steuervorrichtung automatisch innerhalb einer Umgebung von einem Startpunkt zu einem Zielpunkt zu fahren, wobei die Umgebung Zwischenpunkte und die Zwischenpunkte, den Startpunkt und den Zielpunkt verbindende Streckenabschnitte umfasst, und
- einen Rechner, der eingerichtet ist, die Strategie gemäß dem erfindungsgemäßen Verfahren zu berechnen, damit das fahrerlose Transportfahrzeug vom Startpunkt zum Zielpunkt automatisch fährt, und der eingerichtet ist, insbesondere drahtlos eine Angabe über die Strategie an das fahrerlose Transportfahrzeug zu übermitteln.

Das fahrerlose Transportfahrzeug ist z.B. ein mobiler Roboter. Das als mobiler Roboter ausgeführte fahrerlose Transportfahrzeug kann einen Roboterarm mit mehreren hintereinander angeordneten Gliedern umfassen, die mittels Gelenke verbunden sind. Der Roboterarm kann z.B. am Fahrzeuggrundkörper befestigt sein. Die Steuervorrichtung zum Bewegen der Räder kann auch eingerichtet sein, den Roboterarm zu bewegen.

Das fahrerlose Transportfahrzeug kann vorzugsweise als ein holonomes bzw. omnidirektionales fahrerloses Transportfahrzeug ausgebildet sein. In diesem Fall umfasst das fahrerlose Transportfahrzeug omnidirektionale Räder, vorzugsweise sogenannte Mecanum-Räder, welche von der Steuervorrichtung angesteuert werden.

Erfindungsgemäß soll das fahrerlose Transportfahrzeug innerhalb der Umgebung, z.B. einer Halle, automatisch vom Startpunkt zum Zielpunkt fahren. Die Umgebung umfasst neben dem Startpunkt und dem Zielpunkt die Zwischenpunkte, welche durch die Streckenabschnitte verbunden sind. Während der automatischen Fahrt bewegt sich das fahrerlose Transportfahrzeug vom Startpunkt über einen oder mehrere Zwischenpunkte und entlang den entsprechenden Streckenabschnitten zum Zielpunkt.

Erfindungsgemäß sind die Knoten des Graphen den Zwischenpunkten der Umgebung zugeordnet bzw. der Startknoten dem Startpunkt und der Zielknoten dem Zielpunkt. Die Kanten des Graphen sind wiederum den einzelnen Streckenabschnitten zugeordnet und umfassen jeweils eine Information über die zeitliche Passierbarkeit der einzelnen Streckenabschnitte, also ob zu einer bestimmten Zeit der entsprechende Streckenabschnitt befahrbar ist. Außerdem umfasst jede Kante eine Information über die Fahrdauer, die das fahrerlose Transportfahrzeug braucht, den entsprechenden befahrbaren Streckenabschnitt zu durchfahren. Aufgrund dieser Informationen wird die Strategie berechnet. Anschließend kann das fahrerlose Transportfahrzeug automatisch entlang den entsprechenden Streckenabschnitten vom Startpunkt zum Zielpunkt fahren.

Um automatisch vom Startpunkt zum Zielpunkt zu fahren, wird vor der Fahrt zunächst die Strategie berechnet, aufgrund derer das fahrerlose Transportfahrzeug automatisch vom Startpunkt zum Zielpunkt fährt. Die Strategie basiert auf dem aktuellen Zeitpunkt am Startknoten und berücksichtigt die den Kanten zugeordneten Informationen. Somit kann für verschiedene potenzielle bzw. errechnete Ankunftszeiten an verschiedenen Zwischenpunkten und basierend auf den tatsächlichen Ankunftszeiten an den entsprechenden Zwischenpunkten automatisch der nächste Zwischenpunkt bestimmt und automatisch angefahren werden, welcher zum aktuellen Zeitpunkt das schnellstmögliche Fahren des fahrerlosen Transportfahrzeugs erlaubt.

Nach einer Ausführungsform des erfindungsgemäßen Verfahrens fährt dieses, insbesondere gesteuert durch eine Steuervorrichtung des fahrerlosen Transportfahrzeugs, entlang der Streckenabschnitte basierend auf einer virtuellen Karte der Umgebung. Die virtuelle Karte ist z.B. in der Steuervorrichtung des fahrerlosen Transportfahrzeugs gespeichert und bildet die Umgebung ab. Beispielsweise mittels Sensoren des fahrerlosen Transportfahrzeugs kann dieses während der Fahrt die Umgebung abtasten um aufgrund der virtuellen Karte seine Position in der Umgebung bestimmen.

Nach einer bevorzugten Ausführungsform des erfindungsgemäßen Verfahrens wird während des automatischen Fahrens des fahrerlosen Transportfahrzeugs an wenigstem einem der entsprechenden Zwischenpunkte zum aktuellen Zeitpunkt und basierend auf den den Kanten zugeordneten Informationen eine aktualisierte Strategie berechnet, entlang welcher Streckenabschnitte dem fahrerlosen Transportfahrzeug das schnellstmöglichste automatische Fahren vom aktuellen Zwischenpunkt zum Zielpunkt erlaubt ist, wobei die aktualisierte Strategie eine Information über errechnete potenzieller Ankunftszeiten an den entsprechenden Zwischenpunkten und dem Zielpunkt umfasst. Danach fährt automatisch das fahrerlose Transportfahrzeugs zum Zielpunkt, basierend auf der aktualisierten Strategie. Die aktualisierte Strategie wird vorzugsweise vom fahrerlosen Transportfahrzeug selber berechnet. Es kann aber auch vorgesehen sein, dass die aktualisierte Strategie vom Rechner berechnet wird. Für das Berechnen der aktualisierten Strategie wird quasi der aktuelle Zwischenknoten als neuer Startknoten verwendet. Erfindungsgemäß umfassen die Kanten die Information über die Passierbarkeit, also ob zu einer bestimmten Zeit der entsprechende Streckenabschnitt befahrbar ist, also insbesondere zu welchen Zeiten am Tag der entsprechende Streckenabschnitt befahrbar ist. Da während der Fahrt des fahrerlosen Transportfahrzeugs Zeit verstreicht, kann es möglich sein, dass während der Fahrt andere Streckenabschnitte eine kürzere Fahrzeit zum Zielpunkt erlauben als die der ursprünglichen Strategie zugeordneten Streckenabschnitte. Aufgrund des Ermittelns der aktualisierten Strategie während der Fahrt kann gemäß dieser Variante gegebenenfalls eine verkürzte Fahrdauer des fahrerlosen Transportfahrzeugs erreicht werden.

Die Passierbarkeit der Streckenabschnitte und/oder die Informationen über die entsprechenden Fahrdauern können z.B. empirisch und/oder im Rahmen einer Lernphase ermittelt wurden. Insbesondere kann die Passierbarkeit des entsprechenden Streckenabschnitts und/oder die Informationen über die entsprechenden Fahrdauern während des automatischen Fahrens des fahrerlosen Transportfahrzeugs automatisch aktualisiert werden.

Nach einer bevorzugten Variante des erfindungsgemäßen Verfahrens ist die jeweilige Information, ob zu einer bestimmten Zeit der entsprechende Streckenabschnitt befahrbar ist, als ein die Passierbarkeit des entsprechenden Streckenabschnitts zu bestimmten Zeitpunkten beschreibender stochastischer Prozess ausgeführt. Die Informationen über die entsprechenden Fahrdauern sind vorzugsweise jeweils als eine Wahrscheinlichkeitsverteilung ausgeführt, welche die Fahrdauer modelliert, die das fahrerlose Transportfahrzeug bei passierbarem Streckenabschnitt voraussichtlich benötigt. Mittels dieser Wahrscheinlichkeitsverteilungen bzw. stochastischen Prozess kann mathematisch in relativ einfacher Weise die kürzeste Fahrdauer vom Startpunkt zum Zielpunkt berechnet bzw. abgeschätzt werden.

Erfindungsgemäß werden für die einzelnen Streckenabschnitte zu erwartende Fahrdauern berechnet, welche als Wahrscheinlichkeitsverteilung der Ankunftszeiten $P(Y_t)$ am nächsten Zwischenpunkt gemäß folgender Formel berechnet werden:

$$P(Y_t) = \sum_{x \in \{0,1\}} P(X_t = x) P(Y_t | X_t = x)$$

wobei $P(X_t)$ die Wahrscheinlichkeitsverteilung der Passierbarkeit des der entsprechenden Kante zugeordneten Streckenabschnitts und $P(Y_t | X_t)$ die bedingte Wahrscheinlichkeit der Ankunftszeit des der entsprechenden Kante zugeordneten Streckenabschnitts in Abhängigkeit der Passierbarkeit ist.

Ein Ausführungsbeispiel der Erfindung ist exemplarisch in den beigefügten schematischen Figuren dargestellt. Es zeigen:

Fig. 1     eine Draufsicht eines fahrerlosen Transportfahrzeugs,

Fig. 2     eine Seitenansicht des fahrerlosen Transportfahrzeugs,

Fig. 3     eine Umgebung für das fahrerlose Transportfahrzeug,

Fig. 4     eine virtuelle Landkarte und einen Graphen, und

Fig. 5     den Graphen.

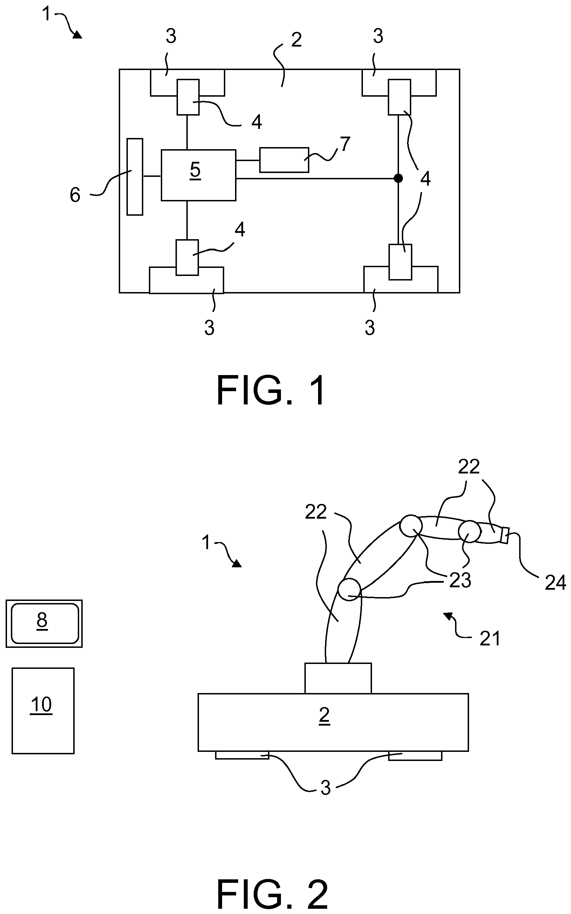

Die Fig. 1 zeigt in einer Draufsicht schematisch ein fahrerloses Transportfahrzeug 1 und die Fig. 2 zeigt eine Seitenansicht des fahrerlosen Transportfahrzeugs 1.

Das fahrerlose Transportfahrzeug 1 ist vorzugsweise derart ausgebildet, dass es sich in alle Richtungen frei bewegen lässt. Das fahrerlose Transportfahrzeug 1 ist insbesondere als ein omnidirektional bewegbares bzw. holonomes fahrerloses Transportfahrzeug ausgebildet. Das fahrerlose Transportfahrzeug 1 kann ein mobiler Roboter sein, der einen Roboterarm 21 mit mehreren, hintereinander angeordneten Gliedern 22 umfasst, welche mittels Gelenke 23 verbunden sind. Der Roboterarm 21 umfasst insbesondere eine Befestigungsvorrichtung z.B. in Form eines Flansches 24, an dem ein nicht näher dargestellter Endeffektor befestigt werden kann.

Im Falle des vorliegenden Ausführungsbeispiels weist das fahrerlose Transportfahrzeug 1 einen Fahrzeuggrundkörper 2 und mehrere omnidirektionale Räder 3 auf, die auch als Mecanum-Räder bezeichnet werden. Solche Räder umfassen beispielsweise eine drehbar gelagerte Felge, an der mehrere Rollkörper antriebslos gelagert sind. Die Felge kann mit einem Antrieb angetrieben werden. Im Falle des vorliegenden Ausführungsbeispiels werden die Räder 3 mit jeweils einem elektrischen Antrieb 4 angetrieben. Diese sind vorzugsweise geregelte elektrische Antriebe.

Das fahrerlose Transportfahrzeug 1 weist ferner eine am Fahrzeuggrundkörper 2 angeordnete Steuervorrichtung 5 auf, die mit den Antrieben 4 verbunden ist. Gegebenenfalls kann diese auch die Bewegung des Roboterarms 21, wenn vorhanden, ansteuern.

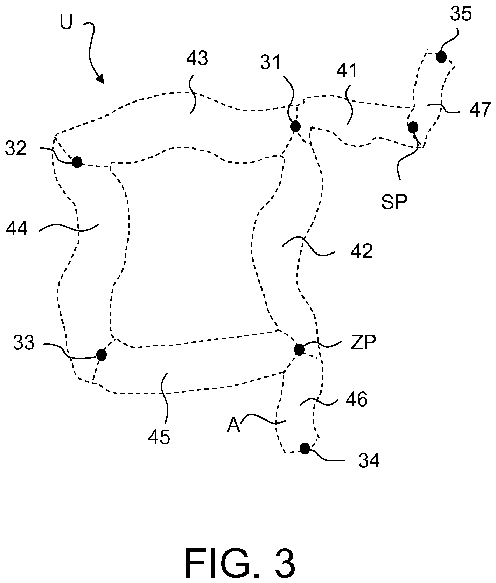

Das fahrerlose Transportfahrzeug 1 ist vorgesehen, sich automatisch in einer in der Fig. 3 gezeigten Umgebung U zu bewegen, insbesondere automatisch von einem Startpunkt SP zu einem Zielpunkt ZP zu fahren. Dazu läuft auf der Steuervorrichtung 5 ein Rechenprogramm, das die Antriebe 4 derart ansteuert, dass diese automatisch das fahrerlose Transportfahrzeug 1 vom Startpunkt SP zum Zielpunkt ZP bewegt.

Im Falle des vorliegenden Ausführungsbeispiels sind der Umgebung U nicht nur der Startpunkt SP und der Zielpunkt ZP zugeordnet, sondern auch mehrere Zwischenpunkte. Im Falle des vorliegenden Ausführungsbeispiels handelt es sich bei den Zwischenpunkten um einen ersten Zwischenpunkt 31, einen zweiten Zwischenpunkt 32, einen dritten Zwischenpunkt 33, einen vierten Zwischenpunkt 34 und einen fünften Zwischenpunkt 35.

Die Zwischenpunkte 31-35 sind durch Streckenabschnitte verbunden, auf denen das fahrerlose Transportfahrzeug 1 gegebenenfalls zwischen zwei Zwischenpunkten fahren kann. Die Fig. 3 zeigt einen ersten Streckenabschnitt 41, der den Startpunkt SP mit dem ersten Zwischenpunkt 31 verbindet, einen zweiten Streckenabschnitt 42, der den ersten Zwischenpunkt 31 mit dem Zielpunkt ZP verbindet, einen dritten Streckenabschnitt 43, der den ersten Zwischenpunkt 31 mit dem zweiten Zwischenpunkt 32 verbindet, einen vierten Streckenabschnitt 44, der den zweiten Zwischenpunkt 32 mit dem dritten Zwischenpunkt 33 verbindet, einen fünften Streckenabschnitt 45, der den dritten Zwischenpunkt 33 mit dem Zielpunkt ZP verbindet, einen sechsten Streckenabschnitt 46, der den Zielpunkt ZP mit dem vierten Zwischenpunkt 34 verbindet und einen siebten Streckenabschnitt 47, der den Startpunkt SP mit dem fünften Zwischenpunkt 35 verbindet.

Das fahrerlose Transportfahrzeug 1 umfasst ferner wenigstens einen mit der Steuervorrichtung 5 verbundenen und z.B. am Fahrzeuggrundkörper 2 angeordneten Sensor 6. Der bzw. die Sensoren 6 umfassen z.B. wenigstens einen Laserscanner und/oder wenigstens eine Kamera und sind vorgesehen, die Umgebung U des fahrerlosen Transportfahrzeugs 1 während seines automatischen Fahrens zu erfassen bzw. abzutasten bzw. Bilder von der Umgebung U des fahrerlosen Transportfahrzeugs 1 zu erstellen. Die Steuervorrichtung 5 wiederum ist eingerichtet, die von den Sensoren 6 stammenden Signale oder Daten z.B. mittels Bilddatenverarbeitung zu verarbeiten bzw. auszuwerten. Der wenigstens eine Sensor 6 umfasst z.B. einen 2D Laserscanner, einen 3D Laserscanner, eine RGBD Kamera und/oder eine TOF Kamera. TOF-Kameras sind 3D-Kamerasysteme, die mit dem Laufzeitverfahren Distanzen messen.

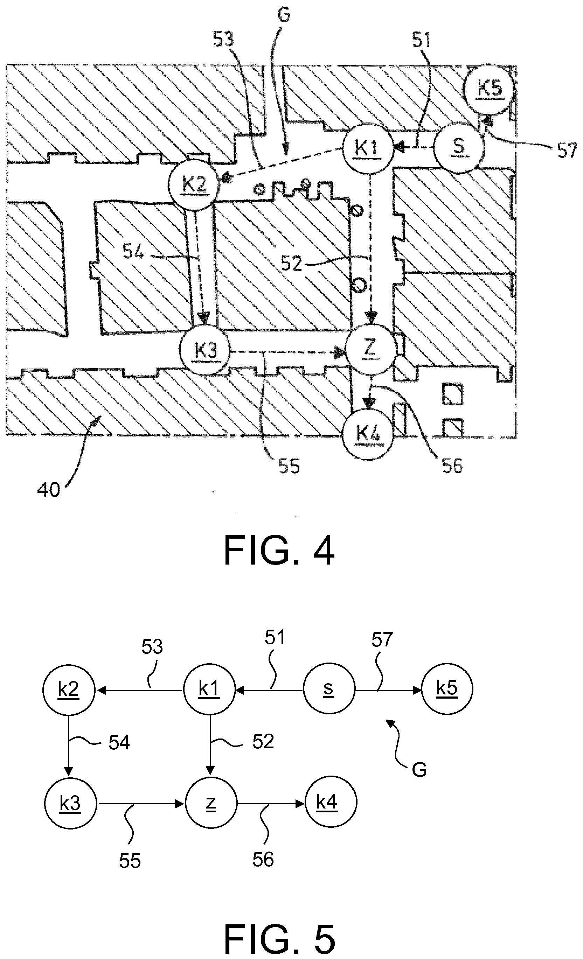

Wie bereits ausgeführt, ist im Falle des vorliegenden Ausführungsbeispiels das fahrerlose Transportfahrzeug 1 eingerichtet, automatisch vom Startpunkt SP zum Zielpunkt ZP innerhalb der Umgebung U zu fahren. Dazu ist im Falle des vorliegenden Ausführungsbeispiels z.B. in der Steuervorrichtung 5 eine in der Fig. 4 gezeigte virtuelle Karte 40 bzw. eine digitale Landkarte derjenigen Umgebung U gespeichert, in der sich das fahrerlose Transportfahrzeug 1 bewegen soll. Die Umgebung U ist z.B. eine Halle. Die virtuelle Karte 40 wurde z.B. durch ein sogenanntes SLAM Verfahren z.B. basierend auf Signalen bzw. Daten der Sensoren 6 und/oder aufgrund von nicht näher dargestellten, den Rädern 3 zugeordneten Radsensoren, erstellt. Die virtuelle Karte 40 ist z.B. in einem Speicher 7 des fahrerlosen Transportfahrzeugs 1 gespeichert, der mit der Steuervorrichtung 5 gekoppelt ist. Die virtuelle Karte 40 kann z.B. mittels einer Anzeigevorrichtung 8 dargestellt werden. Somit ist es dem fahrerlosen Transportfahrzeug 1 möglich, sich automatisch zum Zielpunkt ZP zu bewegen, sobald es ihm bekannt ist, entlang welcher Streckenabschnitte der Umgebung U es automatisch zum Zielpunkt ZP fahren soll.

Im Falle des vorliegenden Ausführungsbeispiels werden die zu befahrenden Streckenabschnitte mit Hilfe eines in den Figuren 4 und 5 gezeigten Graphen G ermittelt. Insbesondere werden die Streckenabschnitte aufgrund einer sich potenziell ändernden Umgebung U ermittelt, die sich u.a. dadurch ändern kann, dass zumindest einer der Streckenabschnitte nicht ständig befahrbar ist und dass die Zeit, die das fahrerlose Transportfahrzeug 1 benötigt, um einen bestimmten Streckenabschnitt der Umgebung U zu durchfahren, sich ändern kann. Diese Planung führt z.B. das fahrerlose Transportfahrzeug 1 selbst durch, z.B. mittels seiner Steuervorrichtung 5 bzw. einem auf seiner Steuervorrichtung 5 laufenden Rechenprogramms. Die Planung kann aber z.B. auch mittels eines externen Rechners 10 bzw. einem auf dem Rechner 10 laufenden Rechenprogramms durchgeführt werden, wobei der Rechner 10 das Ergebnis der Planung dem Steuerrechner 5 vorzugsweise drahtlos übermittelt. Der Graph G kann z.B. zusammen mit der virtuellen Karte 40 auf der Anzeigevorrichtung 8 dargestellt werden, wie dies in der Fig. 4 dargestellt ist.

Der Graph G umfasst mehrere Knoten und die Knoten verbindende Kanten. Der Graph G umfasst insbesondere einen Startknoten s, einen Zielknoten z, einen ersten Knoten k1, einen zweiten Knoten k2, einen dritten Knoten k3, einen vierten Knoten k4 und einen fünften Knoten k5. Der Graph G umfasst insbesondere eine erste Kante 51, eine zweite Kante 52, eine dritte Kante 53, eine vierte Kante 54, eine fünfte Kante 55, eine sechste Kante 56 und eine siebte Kante 57. Im Falle des vorliegenden Ausführungsbeispiels verbindet die erste Kante 51 den Startknoten s mit dem ersten Knoten k1, die zweite Kante 52 den ersten Knoten k1 mit dem Zielknoten z, die dritte Kante 53 den ersten Knoten k1 mit dem zweiten Knoten k2, die vierte Kante 54 den zweiten Knoten k2 mit dem dritten Knoten k3, die fünfte Kante 55 den dritten Knoten k3 mit dem Zielknoten z, die sechste Kante 56 den Zielknoten z mit dem vierten Knoten k4 und die siebte Kante 57 den Startknoten s mit dem fünften Knoten k5.

Im Falle des vorliegenden Ausführungsbeispiels ist dem Startpunkt SP in der Umgebung U der Startknoten s des Graphs G und der Zielpunkt ZP dem Zielknoten z zugeordnet. Außerdem sind die Zwischenpunkte 31-35 der Umgebung U den Knoten k1-k5 des Graphen G und die Streckenabschnitte 41-47 den Kanten 51-57 zugeordnet. Insbesondere ist der erste Zwischenpunkt 31 der Umgebung U dem ersten Knoten k1 des Graphen G, der zweite Zwischenpunkt 32 der Umgebung U dem zweiten Konten k2 des Graphen G, der dritte Zwischenpunkt 33 der Umgebung U dem dritte Konten k3 des Graphen G, der vierte Zwischenpunkt 34 der Umgebung U dem vierte Konten k4 des Graphen G und der fünfte Zwischenpunkt 35 der Umgebung U dem fünfte Konten k5 des Graphen G zugeordnet. Insbesondere ist der erste Streckenabschnitt 41 der ersten Kante 51, der zweite Streckenabschnitt 42 der zweiten Kante 52, der dritte Streckenabschnitt 43 der dritten Kante 53, der vierte Streckenabschnitt 44 der vierten Kante 54, der fünfte Streckenabschnitt 45 der fünften Kante 55, der sechste Streckenabschnitt 46 der sechsten Kante 56, und der siebte Streckenabschnitt 47 der siebten Kante 57 zugeordnet.

Der Graph G ist insbesondere ein gerichteter Graph G, weshalb die Kanten 51-57 als Pfeile in den Figuren 4 und 5 dargestellt sind. Der Graph G kann durch folgende Gleichung mathematisch beschrieben werden:

$$G = \langle V, E \rangle,$$

wobei $V$ eine endliche Menge der Knoten s, z, k1-k5 und E und $E \subseteq V \times V$ die Menge der Kanten 51-57 ist.

Im Falle des vorliegenden Ausführungsbeispiels ist jeder einzelnen Kante 41-47 jeweils eine Information über den ihr zugeordneten Streckenabschnitt 51-57 zugeordnet.

Im Falle des vorliegenden Ausführungsbeispiels umfasst die Information über die entsprechenden Streckenabschnitte 51-57 eine Passierbarkeit der entsprechende Kante 51-57 bzw. des entsprechenden Streckenabschnitts 41-47, also eine Information, ob das fahrerlose Transportfahrzeug 1 zu einer bestimmten Zeit den entsprechenden Streckenabschnitt befahren kann, und die Fahrdauer, die das fahrerlose Transportfahrzeug 1 braucht, den entsprechenden befahrbaren Streckenabschnitt zu durchfahren.

Im Falle des vorliegenden Ausführungsbeispiels ist jedem der Kanten 51-57 ein stochastischer Prozess zugeordnet, der die Passierbarkeit des entsprechenden Streckenabschnitts 41-47 zu bestimmten Zeitpunkten beschreibt und eine Wahrscheinlichkeitsverteilung, welche die Fahrdauer modelliert, die das fahrerlose Transportfahrzeug 1 bei passierbarem Streckenabschnitt 41-47 voraussichtlich benötigt.

Die Planung der zu befahrenden Streckenabschnitte wird mittels des Graphen G durchgeführt. Im Rahmen der Planung wird eine Strategie berechnet, entlang welcher Streckenabschnitte 41-47 dem fahrerlosen Transportfahrzeug 1 das schnellstmögliche automatische Fahren zum Zielpunkt ZP erlaubt ist. Die Strategie umfasst eine Information über errechnete potenzieller Ankunftszeiten an den entsprechenden Zwischenpunkten 31-35 und dem Zielpunkt ZP. Die Planung kann während der Fahrt des fahrerlosen Transportfahrzeugs 1 an wenigstens einem der Zwischenpunkte 31-35, den das fahrerlose Transportfahrzeug 1 auf seiner Fahrt passiert, wiederholt werden, wobei dann dieser Zwischenpunkt ein neuer Startpunkt für die aktualisierte Planung darstellt. Bei der wiederholten Planung wird eine aktualisierte Strategie berechnet, gemäß dieser das fahrerlose Transportfahrzeug 1 automatisch vom aktuellen Zwischenpunkt zum Zielpunkt ZP fährt.

Die Planung der zu befahrenden Streckenabschnitte kann vorzugsweise als ein Markow-Entscheidungsproblem angesehen werden, bei dem

$$S = \left\{ (i,t) \middle| i \in V, t \in N_0 \right\}$$

der Zustandsraum ist, der dem Startpunk SP, den Zwischenpunkten 31-35 und dem Zielpunkt ZP bzw. dem Startknoten s, dem Zielknoten z und den Zwischenknoten k1-k5 und der Ankunftszeit $t$ an den entsprechenden Zwischenpunkten 31-35 bzw. dem Zielpunkt ZP zugeordnet ist.

$A(i,t) = N_G(i)$ ist der Aktionsraum für jeden Zustand $(i,t) \in S$, wobei $N_G(i)$ die Menge aller benachbarten Knoten $i,$ also den Knoten k1-k5, dem Startknoten s und dem Zielknoten z, im Graphen G zugeordnet ist.

$P((j,t')|(i,t),j)$ ist ein Durchgängigkeits-Modell bzw. eine Durchgängigkeitswahrscheinlichkeit, welche einer Wahrscheinlichkeit zugeordnet ist, dass das fahrerlose Transportfahrzeug 1 am $j$-ten Zwischenpunkt zum Zeitpunkt $t'$ ankommt, wenn es am $i$-ten Zwischenpunkt zum Zeitpunkt $t$ losgefahren ist. Diese Wahrscheinlichkeit hängt von der Passierbarkeit der den entsprechenden Kanten $(i,j)$ (Kanten 51-57) zugeordneten Streckenabschnitten 41-47 und der Wahrscheinlichkeitsverteilung ab, welche die Fahrdauer modelliert, die das fahrerlose Transportfahrzeug 1 bei passierbarem Streckenabschnitt voraussichtlich benötigt. Das vorliegende Markow-Entscheidungsproblem ist insbesondere ein sogenanntes linksrechts Modell, da keine Übergänge in Zustände möglich sind, deren zugeordnete Ankunftszeiten kleiner oder gleich des aktuellen Zustands sein können.

Mit $c : S \times S \to N_0 \cup \{\infty\}$ wird eine mittlere Kostenfunktion bezeichnet, welche der Zeit zugeordnet ist, die das fahrerlose Transportfahrzeug 1 braucht, um von einem Zustand zum nächsten zu fahren, also von einem Zwischenpunkt zum nächsten. Ist die entsprechende Durchgangswahrscheinlichkeit Null, dann wird die Kostenfunktion auf "Unendlich" gesetzt.

Bei gegebenem Zielknoten z ($z \in G$) kann eine optimale Strategie $\pi^*$ berechnet werden, welche die erwartete Ankunftszeit am Zielpunkt ZP für jeden Zustand s minimiert. Die minimale erwartete Ankunftszeit $C^*(i,t)$ für einen Zustand $(i,t) \in S$ kann durch folgende Gleichung (Gleichung Nr. 1) berechnet werden:

$$C^*(i,t) = \min_{j \in A(i,t)} \sum_{t'=t+1}^{\infty} C^*(j,t') P((j,t') | (i,t), j)$$

Der dem Zielknoten z zugeordnete Zielzustand $(z,t)$ wird insbesondere mit t initialisiert, d.h. $C^*(z,t)=t$.

Um insbesondere eine relativ effiziente Berechnung der Ankunftszeit vorzugsweise mittels dynamischer Berechnung zu erhalten, wird im Falle des vorliegenden Ausführungsbeispiels ausgenutzt, dass ein Zeitpunkt $t_m$ existiert, sodass $C^*(i,t_m+t) = C^*(i,t_m)+t$ für alle $t \in N_0$. Dies bedeutet, dass für alle Zeitschritte größer als $t_m$ die Zeit, die benötigt wird, um den Zielpunkt ZP zu erreichen, nicht vom aktuellen Zeitpunkt abhängt.

$X_t$ ist eine Zufallsvariable, welche die Passierbarkeit einer bestimmten Kante 51-57 bzw. ihres zugeordneten Streckenabschnitts 41-47 zum Zeitpunkt t beschreibt, wobei

$$X_t = \begin{cases} 0, \text{falls die entsprechende Kante zum Zeitpunkt t passierbar ist} \\ 1, \text{falls die entsprechende Kante zum Zeitpunkt t nicht passierbar ist} \end{cases}$$

Im Falle des vorliegenden Ausführungsbeispiels wurde diese Wahrscheinlichkeit für die einzelnen Zeitpunkte empirisch ermittelt. Es ist aber auch möglich, dass diese Wahrscheinlichkeit automatisch mittels des fahrerlosen Transportfahrzeugs 1 ermittelt wird, indem es z.B. während einer Lernphase automatisch durch die Umgebung fährt und dabei für die einzelnen Zeitpunkte speichert, wann welcher Streckenabschnitt passierbar ist. Diese Lernphase kann auch während des laufenden Betriebs zumindest teilweise erfolgen, um z.B. die Angabe besagter Wahrscheinlichkeit zu verbessern. Die Lernphase kann komplett während des laufenden Betriebes erfolgen

Im Falle des vorliegenden Ausführungsbeispiels wird angenommen, dass die Durchgängigkeitswahrscheinlichkeit einer bestimmten Kante bzw. deren zugeordneten Streckenabschnitts unabhängig von den Durchgängigkeitswahrscheinlichkeiten der restlichen Kanten bzw. deren zugeordneten Streckenabschnitte ist. Außerdem wird im Falle des vorliegenden Ausführungsbeispiels von einem homogenen Markow Prozess erster Ordnung mit einer Durchgängigkeitsmatrix

$$A = \begin{pmatrix} p_{00} & p_{01} \\ p_{10} & p_{11} \end{pmatrix}$$

ausgegangen.

Sollte t gegen "Unendlich" gehen, nähert sich $X_t$ einer stationären Verteilung an. Die Zeitdauer für diese Annäherung wird als Mischzeit bezeichnet. Die Mischzeit des gesamten Graphen G lautet: $t_m = \max\left\{ t_m^e \, \middle| \, e \in E \right\}$, wobei

$t_m^e$ die Mischzeit der jeweiligen Kante 51-57 ist.

Im Falle des vorliegenden Ausführungsbeispiels werden die den Kanten 41-47 zugeordneten zu erwartenden Fahrdauern durch die entsprechenden Streckenabschnitte 41-47 als ein stochastischer Prozess $Y_t$ modelliert, der die Wahrscheinlichkeit ausdrückt, dass das fahrerlose Transportfahrzeug 1 den nächsten Zwischenpunkt zu einem bestimmten Zeitpunkt erreicht. Insbesondere ist $P(Y_t=t')$ die Wahrscheinlichkeit, dass das fahrerlose Transportfahrzeug 1 am j-ten Zwischenpunkt zum Zeitpunkt t' ankommt, wenn es am i-ten Zwischenpunkt (der auch der Startpunkt SP sein kann) zum Zeitpunkt t losfährt. Die Wahrscheinlichkeitsverteilung der Ankunftszeit $P(Y_t)$ kann folgendermaßen berechnet werden:

$$P(Y_t) = \sum_{x \in \{0,1\}} P(X_t = x)P(Y_t | X_t = x)$$

wobei $P(X_t)$ die Wahrscheinlichkeitsverteilung der Passierbarkeit des der entsprechenden Kante zugeordneten Streckenabschnitts und $P(Y_t|X_t)$ die bedingte Wahrscheinlichkeit der Ankunftszeit des der entsprechenden Kante zugeordneten Streckenabschnitts in Abhängigkeit der Passierbarkeit ist. Im Falle des vorliegenden Ausführungsbeispiels ist $Y_t$-$t$ die dem Streckenabschnitt zugeordnete Fahrdauer.

Die Fahrdauer ist zeitabhängig, sollte der entsprechende Streckenabschnitt passierbar sein. Im Falle des vorliegenden Ausführungsbeispiels kann die sogenannte diskrete Annäherung der Beta Verteilung verwendet werden, um die bedingte Ankunftszeit zu berechnen, d.h. $P(Y_t|X_t = 0) \sim Beta(\alpha, \beta; a+t, b+1)$.

Sollte ein Streckenabschnitt nicht befahrbar sein, so berechnet sich im Falle des vorliegenden Ausführungsbeispiels die Verteilung der Ankunftszeiten als:

$$P(Y_t | X_t = 1) = \sum_{n=0}^{\infty} (p_{11})^n p_{10} P(Y_{t+n+1} | X_t = 0)$$

Im Falle des vorliegenden Ausführungsbeispiels wird davon ausgegangen, dass der Zustand einer Kante bzw. dessen Streckenabschnitt sich ändern muss, bevor der dem nächsten Knoten zugeordnete Zwischenpunkt erreicht werden kann. Die einer Kante zugeordnete erwartete Ankunftszeit zum Zeitpunkt t ergibt sich zu

$$E[Y_t] = E[Y_t | X_t = 0] + \frac{P(X_t = 1)}{1 - p_{11}}$$

wobei $E[Y_t|X_t=0]$ die einer Kante zugeordnete erwartete Ankunftszeit ist, wenn diese Kante passierbar ist, und $\dfrac{P(X_t = 1)}{1 - p_{11}}$ die erwarteten Zeitschritte sind bzw. Zeitdauer ist, während der das fahrerlose Transportfahrzeug 1 an einem Knoten bzw. Zwischenpunkt voraussichtlich warten muss, bis die nachfolgende Kante bzw. der nachfolgende Streckenabschnitt wieder passierbar ist.

Somit ergibt sich für die einer Kante zugeordnete Wahrscheinlichkeitsverteilung der Ankunftszeit als

$$P((j, t') | (i, j), j) = P(Y_t = t')$$

Um die minimale erwartete Ankunftszeit $C^*(i,t)$ für jeden der Zustände $(i,t) \in S$ zu erhalten, wird im Falle des vorliegenden Ausführungsbeispiels die minimale erwartete Ankunftszeit $C^*(i,t_m)$ für jeden Zustand zum Zeitpunkt $t_m$ mittels folgender Formel berechnet:

$$C^*(i, t_m) = \min_{j \in A(i,t)} \sum_{t'=t+1}^{\infty} (C^*(j, t_m) + t) P(Y_{t_m} = 1)$$

Diese Gleichung erhält man durch Verwendung der Gleichung Nr. 1. Durch Umformen ergibt sich:

$$C^*(i, t_m) = \min_{j \in A(i,t)} C^*(j, t_m) + E[Y_{t_m}]$$

Wie bereits obenstehend beschrieben, gilt für den Zielpunkt ZP, also dem Zielknoten z: $C^*(i,t_m)=t_m$. Beispielsweise mittels des dem Fachmann im Prinzip bekannten Dijkstra Algorithmus kann die voraussichtliche Ankunftszeit am Zielpunkt ZP für alle Zwischenknoten k1-k5 zum Zeitpunkt $t_m$ berechnet werden, indem im Falle des vorliegenden Ausführungsbeispiels für die Kostenfunktion jeder Kante 51-57 die erwartete Fahrdauer $E[Y_{t_m}]$-$t_m$ zum Zeitpunkt $t_m$ eingesetzt wird.

Unter der Annahme, dass die erwartete Ankunftszeit zum Zeitpunkt $t=t_m$ bereits berechnet wurde, können die erwarteten Ankunftszeiten für $t<t_m$ gemäß der Gleichung Nr. 1 z.B. durch Iteration beginnend mit dem Zeitpunkt $t_m$-1 berechnet werden.

Insbesondere werden zur jedem Zustand $(i,t)$ in $S$ nur diejenigen erwarteten Ankunftszeiten für die Zeitschritte größer als t benötigt, die entweder bereits berechnet wurden oder gemäß $C^*(i,t_{m+1})=C^*(i,t_m)+t$ berechnet werden können.

Der Wert der Gleichung Nr. 1 kann z.B. gemäß folgender Gleichung berechnet werden:

$$C^*(i,t) = A + B = \min_{j\in A(i,t)} \sum_{t'=t+1}^{T} C^*(j,t')P(Y_t = t') + \sum_{t'=T+1}^{\infty} C^*(j,t')P(Y_t = t')$$

wobei der Zeitschritt $T$ das Maximum zwischen $t_m$ und $t^*$+1 ist, wobei $t^*$ der größte Wert bezogen auf $P(Y_t|X_t=0)$ ist.

Für den Summanden $A$ wurden die minimal erwarteten Ankunftszeiten bereits berechnet. Der Summand $B$ kann durch folgende Gleichung berechnet werden:

$$B = P(X_t = 1)P(Y_t = t^*+1|X_t = 1)\frac{p_{11}^{T-t^*}}{1-p_{11}} \cdot (C^*(j,t_m) + T + 1 + t - t_m + \frac{p_{11}}{1-p_{11}})$$

## Patentansprüche

1. Verfahren zum Betreiben eines fahrerlosen Transportfahrzeugs (1) innerhalb einer Umgebung (U), das eingerichtet ist, automatisch von einem Startpunkt (SP) zu einem Zielpunkt (ZP) zu fahren, wobei die Umgebung (U) Zwischenpunkte (31-35) und die Zwischenpunkte (31-35), den Startpunkt (SP) und den Zielpunkt (ZP) verbindende Streckenabschnitte (41-47) umfasst, aufweisend folgende Verfahrensschritte:

   a) Bereitstellen eines der Umgebung (U) zugeordneten Graphen (G), der den Zwischenpunkten (31-35) zugeordnete Knoten (k1-k5), einen dem Startpunkt (SP) zugeordneten Startknoten (s), einen dem Zielpunkt (ZP) zugeordneten Zielknoten (z) und den Startknoten (s), den Zielknoten (z) und die Knoten (k1-k5) verbindende, den entsprechenden Streckenabschnitten (41-47) zugeordnete Kanten (51-57) umfasst, wobei den Kanten (51-57) jeweils eine Information über die Passierbarkeit zugeordnet ist, ob zu einer bestimmten Zeit der entsprechende Streckenabschnitt (41-47) befahrbar ist, und die Fahrdauer, die das fahrerlose Transportfahrzeug (1) braucht, den entsprechenden befahrbaren Streckenabschnitt (41-47) zu durchfahren,
   b) basierend auf den den Kanten (51-57) zugeordneten Informationen und dem aktuellen Zeitpunkt am Startpunkt (SP), Berechnen einer Strategie entlang welcher Streckenabschnitte (41-47) dem fahrerlosen Transportfahrzeug (1) das schnellstmögliche automatische Fahren zum Zielpunkt (ZP) erlaubt ist, wobei die Strategie eine Information über errechnete potenzieller Ankunftszeiten an den entsprechenden Zwischenpunkten (31-35) und dem Zielpunkt (ZP) umfasst,
   c) basierend auf der Strategie, automatisches Fahren des fahrerlosen Transportfahrzeugs (1) vom Startpunkt (SP) zum entsprechenden, dem Startpunkt (SP) benachbarten Zwischenpunkt (31) entlang des entsprechenden Streckenabschnitts,
   d) basierend auf der aktuellen Ankunftszeit an dem dem Startpunkt (SP) benachbarten Zwischenpunkt (31) und basierend auf der Strategie, automatisches Fahren des fahrerlosen Transportfahrzeugs (1) zum nächsten Zwischenpunkt (32)entlang des entsprechenden Streckenabschnitts,
   e) basierend auf der aktuellen Ankunftszeit an dem nächsten Zwischenpunkt (32) und basierend auf der Strategie, automatisches Fahren des fahrerlosen Transportfahrzeugs (1) entlang des entsprechenden Streckenabschnitts zum Zwischenpunkt (32), der dem nächsten Zwischenpunkt (31) folgt, und
   f) Wiederholen der Schritte d) und e) bis das fahrerlose Transportfahrzeug (1) am Zielpunkt (1) ankommt, wobei für die einzelnen Streckenabschnitte (41-47) zu erwartende Fahrdauern berechnet werden, welche als Wahrscheinlichkeitsverteilung der Ankunftszeiten $P(Y_t)$ am nächsten Zwischenpunkt gemäß folgender Formel berechnet werden:

$$P(Y_t) = \sum_{x\in\{0,1\}} P(X_t = x)P(Y_t|X_t = x)$$

wobei $P(X_t)$ die Wahrscheinlichkeitsverteilung der Passierbarkeit des der entsprechenden Kante zugeordneten Streckenabschnitts und $P(Y_t|X_t)$ die bedingte Wahrscheinlichkeit der Ankunftszeit des der entsprechenden Kante zugeordneten Streckenabschnitts in Abhängigkeit der Passierbarkeit ist.

2. Verfahren nach Anspruch 1, bei dem während des automatischen Fahrens des fahrerlosen Transportfahrzeugs (1) entlang der ermittelten Streckenabschnitte (41-47) zumindest an einem der entsprechenden Zwischenpunkte (31-35) zum aktuellen Zeitpunkt und basierend auf den den Kanten (51-57) zugeordneten Informationen eine aktualisierte Strategie berechnet wird, entlang welcher Streckenabschnitte (41-47) dem fahrerlosen Transportfahrzeug das schnellstmögliche automatische Fahren vom aktuellen Zwischenpunkt zum Zielpunkt (ZP) erlaubt ist, wobei die aktualisierte Strategie eine Information über errechnete potenzieller Ankunftszeiten an den entsprechenden Zwischenpunkten (31-35) und dem Zielpunkt (ZP) umfasst, und automatisches Fahren des fahrerlosen Transportfahrzeugs (1) zum Zielpunkt (ZP) basierend auf der aktualisierten Strategie.

3. Verfahren nach Anspruch 1 oder 2, bei dem die Passierbarkeit des entsprechenden Streckenabschnitts (41-47) und/oder die Informationen über die entsprechenden Fahrdauern empirisch und/oder im Rahmen einer Lernphase ermittelt wurden.

4. Verfahren nach Anspruch 3, bei dem die Passierbarkeit des entsprechenden Streckenabschnitts (41-47) und/oder die Informationen über die entsprechenden Fahrdauern während des automatischen Fahrens des fahrerlosen Transportfahrzeugs (1) automatisch aktualisiert werden.

5. Verfahren nach einem der Ansprüche 1 bis 4, aufweisend automatisches Fahren des fahrerlosen Transportfahrzeugs (1), insbesondere gesteuert durch die Steuervorrichtung (5) des fahrerlosen Transportfahrzeugs (1), entlang der Streckenabschnitte (41-47) basierend auf einer virtuellen Karte (40) der Umgebung (U).

6. Verfahren nach einem der Ansprüche 1 bis 5, bei dem die jeweilige Information, ob zu einer bestimmten Zeit der entsprechende Streckenabschnitt (41-47) befahrbar ist, als ein die Passierbarkeit des entsprechenden Streckenabschnitts (41-47) zu bestimmten Zeitpunkten beschreibender stochastischer Prozess ausgeführt ist, und/oder die Information über die entsprechenden Fahrdauern jeweils als eine Wahrscheinlichkeitsverteilung ausgeführt ist, welche die Fahrdauer modelliert, die das fahrerlose Transportfahrzeug (1) bei passierbarerem Streckenabschnitt (41-47) voraussichtlich benötigt.

7. Fahrerloses Transportfahrzeug, aufweisend einen Fahrzeuggrundkörper (2), mehrere, drehbar relativ zum Fahrzeuggrundkörper (2) gelagerte Räder (3) zum Bewegen des fahrerlosen Transportfahrzeugs (1), wenigstens einen mit wenigstens einem der Räder (3) gekoppelten Antrieb (4) zum Antreiben des entsprechenden Rades (3) und eine mit dem wenigstens einen Antrieb (4) gekoppelte Steuervorrichtung (5), wobei das fahrerlose Transportfahrzeug (1) eingerichtet ist, gesteuert durch seine Steuervorrichtung (5) automatisch innerhalb einer Umgebung (U) von einem Startpunkt (SP) zu einem Zielpunkt (ZP) zu fahren, wobei die Umgebung (U) Zwischenpunkte (31-35) und die Zwischenpunkte (31-35), den Startpunkt (SP) und den Zielpunkt (ZP) verbindende Streckenabschnitte (41-47) umfasst und die Steuervorrichtung (5) eingerichtet ist, eine Strategie gemäß dem Verfahren nach einem der Ansprüche 1 bis 6 zu berechnen, gemäß derer das fahrerlose Transportfahrzeug (1) vom Startpunkt (SP) zum Zielpunkt (ZP) automatisch fährt.

8. System, aufweisend

   - ein fahrerloses Transportfahrzeug (1), das einen Fahrzeuggrundkörper (2), mehrere, drehbar relativ zum Fahrzeuggrundkörper (2) gelagerte Räder (3) zum Bewegen des fahrerlosen Transportfahrzeugs (1), wenigstens einen mit wenigstens einem der Räder (3) gekoppelten Antrieb (4) zum Antreiben des entsprechenden Rades (3) und eine mit dem wenigstens einen Antrieb (4) gekoppelte Steuervorrichtung (5) aufweist, wobei das fahrerlose Transportfahrzeug (1) eingerichtet ist, gesteuert durch seine Steuervorrichtung (5) automatisch innerhalb einer Umgebung (U) von einem Startpunkt (SP) zu einem Zielpunkt (ZP) zu fahren, wobei die Umgebung (U) Zwischenpunkte (31-35) und die Zwischenpunkte (31-35), den Startpunkt (SP) und den Zielpunkt (ZP) verbindende Streckenabschnitte (41-47) umfasst, und
   - einen Rechner (10), der eingerichtet ist, eine Strategie gemäß dem Verfahren nach einem der Ansprüche 1 bis 6 zu ermitteln, gemäß derer das fahrerlose Transportfahrzeug (1) vom Startpunkt (SP) zum Zielpunkt (ZP) automatisch fährt, und der eingerichtet ist, insbesondere drahtlos eine Information über die Strategie an das fahrerlose Transportfahrzeug (1) zu übermitteln.

**Claims**

1. Method for operating an driverless transport vehicle (1) within an environment (U), which is configured to travel automatically from a start point (SP) to an end point (ZP), wherein the environment (U) comprises intermediate points (31-35) and track sections (41-47) connecting the intermediate points (31-35), the start point (SP) and the end point (ZP), comprising the following method steps:

   a) providing a graph (G) assigned to the environment (U), the graph comprising nodes (k1-k5) assigned to the intermediate points (31-35), a start node (s) assigned to the start point (SP), an end node (z) assigned to the end point (ZP), and edges (51-57) assigned to corresponding track sections (41-47) connecting the start node (s), the end node (z) and nodes (k1-k5), wherein information is assigned to the edges (51-57) respectively regarding the navigability of whether the corresponding track section (41-47) can be travelled at a specific point in time and the travel time required by the driverless transport vehicle (1) for travelling the course of the corresponding navigable track section (41-47),

   b) based on the information assigned to the edges (51-57) and the current point in time at the start point (SP), calculating a strategy for determining the track sections (41-47) along which the driverless transport vehicle (1) can travel most quickly in an automated manner to the end point (ZP), wherein the strategy comprises information regarding calculated potential arrival times at the corresponding intermediate points (31-35) and the end point (ZP),

   c) based on the strategy, automatically moving the driverless transport vehicle (1) from the start point (SP) to the corresponding intermediate point (31) adjacent to the start point (SP) along the corresponding track section,

   d) based on the current arrival time at the intermediate point (31) adjacent to the start point (SP), and based on the strategy, automatically moving the driverless transport vehicle (1) to the next intermediate point (32) along the corresponding track section,

   e) based on the current arrival time at the next intermediate point (32), and based on the strategy, automatically moving the driverless transport vehicle (1) along the corresponding track section to the intermediate point (32), which follows the next intermediate point (31), and

   f) repeating steps d) and e) until the driverless transport vehicle (1) arrives at the end point (1), wherein the expected travel times are calculated for the individual track sections (41-47), which are calculated as probability distribution of the arrival times $P(Y_t)$ at the next intermediate point according to the following formula:

$$P(Y_t) = \sum_{x \in \{0,1\}} P(X_t = x)P(Y_t|X_t = x)$$

   wherein $P(X_t)$ is the probability distribution for the navigability of the track section assigned to the corresponding edge, and $P(Y_t|X_t)$ is the conditional probability for the arrival time of the track section assigned to the corresponding edge, as a function of the navigability.

2. Method according to claim 1, wherein during the automatic movement of the driverless transport vehicle (1) along the determined track sections (41-47) at least one updated strategy is calculated at one of the corresponding intermediate points (31-35) at the current point in time, and based on information assigned to the edges (51-57), determining the track sections (41-47) along which the driverless transport vehicle can most quickly travel from the current intermediate point to the end point (ZP), wherein the updated strategy comprises information regarding calculated potential arrival times at the corresponding intermediate points (31-35) and the end point (ZP), and automatically moving the driverless transport vehicle (1) to the end point (ZP) based on the updated strategy.

3. Method according to claim 1 or 2, wherein the navigability of the corresponding track section (41-47) and/or the information regarding the corresponding travel times is determined empirically and/or as part of a learning phase.

4. Method according to claim 3, wherein the navigability of the corresponding track section (41-47) and/or information regarding the corresponding travel times is automatically updated during the automatic movement of the driverless transport vehicle (1).

5. Method according to any of claims 1 to 4, comprising automatically moving the driverless transport vehicle (1), in particular controlled by the control device (5) of the driverless transport vehicle (1) along the track sections (41-47) based on a virtual map (40) of the environment (U).

**6.** Method according to any of claims 1 to 5, wherein the respective information regarding whether the corresponding track section (41-47) is navigable at a specific point in time, is implemented as a stochastic process describing the navigability of the corresponding track section (41-47) at specific points in time, and/or the information regarding the corresponding travel times is implemented respectively as a probability distribution, which provides a model of the travel time which is expected to be required by the driverless transport vehicle (1) on a navigable track section (41-47).

**7.** Driverless transport vehicle, comprising a vehicle base body (2),
a plurality of wheels (3) mounted to be rotatable in relation to the vehicle base body (2) for moving the driverless transport vehicle (1),
at least one drive (4) coupled to at least one of the wheels (3) for driving the corresponding wheel (3) and a control device (5) coupled to the at least one drive (4), wherein the driverless transport vehicle (1) is configured to travel automatically, controlled by means of its control device (5), within an environment (U) from a start point (SP) to an end point (ZP), wherein the environment (U) comprises intermediate points (31-35) and track sections (41-47) connecting the intermediate points (31-35), the start point (SP) and the end point (ZP), and the control device (5) is configured to calculate a strategy according to the method of any of claims 1 to 6, according to which the driverless transport vehicle (1) travels automatically from the start point (SP) to the end point (ZP).

**8.** System, comprising:

- a driverless transport vehicle (1), having a vehicle base body (2), a plurality of wheels (3) mounted to be rotatable in relation to the vehicle base body (2) for moving the driverless transport vehicle (1), at least one drive (4) coupled to at least one of the wheels (3) for driving the corresponding wheel (3), and a control device (5) coupled to the at least one drive (4), wherein the driverless transport vehicle (1) is configured to travel, controlled by its control device (5), automatically within an environment (U) from a start point (SP) to an end point (ZP), wherein the environment (U) comprises intermediate points (31-35) and track sections (41-47) connecting the intermediate points (31-35), the start point (SP) and the end point (ZP), and
- a computer (10), which is configured to determine a strategy according to the method of any of claims 1 to 6, according to which the driverless transport vehicle (1) travels automatically from the start point (SP) to the end point (ZP), and which is configured in particular to wirelessly transmit information regarding the strategy to the driverless transport vehicle (1).

**Revendications**

**1.** Procédé pour faire fonctionner un véhicule de transport sans conducteur (1) dans un environnement (U), qui est configuré pour se déplacer automatiquement depuis un point de départ (SP) jusqu'à un point de destination (ZP), l'environnement (U) comprenant des points intermédiaires (31-35) et des tronçons de trajet (41-47) reliant le point de départ (SP) et le point de destination (ZP), comprenant les étapes de procédé suivantes :

a) fourniture d'un graphe (G) associé à l'environnement (U) qui comprend des nœuds (k1-k5) associés aux points intermédiaires (31-35), un nœud de départ (s) associé au point de départ (SP), un nœud de destination (z) associé au point de destination (ZP) et des bords (51-57) associés aux tronçons de trajet (41-47) correspondants et reliant le nœud de départ (s), le nœud de destination (z) et les nœuds (k1-k5), à chacun des bords (51-57) étant associée une informations respective sur la possibilité de passage, sur le fait si le tronçon de trajet correspondant (41-47) est praticable à un moment donné, et sur la durée de parcours dont le véhicule de transport sans conducteur (1) a besoin pour parcourir le tronçon de trajet (41-47) praticable correspondant,
b) sur la base des informations associées aux bords (51 - 57) et de l'heure actuelle au point de départ (SP), calcul d'une stratégie pour déterminer le long de quels tronçons de trajet (41 - 47) la conduite automatique la plus rapide possible est autorisée au véhicule de transport sans conducteur (1) jusqu'au point de destination (ZP), la stratégie comprenant des informations sur les heures d'arrivée potentielles calculées aux points intermédiaires correspondants (31-35) et au point de destination (ZP),
c) sur la base de la stratégie, conduite automatique du véhicule de transport sans conducteur (1) depuis le point de départ (SP) jusqu'au point intermédiaire (31) correspondant, adjacent au point de départ (SP) le long du tronçon de trajet correspondant,
d) sur la base de l'heure d'arrivée actuelle au point intermédiaire (31) adjacent au point de départ (S P) et sur la base de la stratégie, conduite automatique du véhicule de transport sans conducteur (1) jusqu'au prochain point intermédiaire suivant (32) le long du tronçon de trajet correspondant,

e) sur la base de l'heure d'arrivée actuelle au point intermédiaire suivant (32) et sur la base de la stratégie, conduite automatique du véhicule de transport sans conducteur (1) le long du tronçon de trajet correspondant jusqu'au point intermédiaire (32) qui suit le point intermédiaire suivant (31), et

f) répétition des étapes d) et e) jusqu'à ce que le véhicule de transport sans conducteur (1) arrive au point de destination (1), les durées de parcours à prévoir étant calculées pour les différents tronçons de trajet (41-47), lesquelles sont calculées en tant que distribution de probabilité des temps d'arrivée $P(Y_t)$ au point intermédiaire suivant selon la formule suivante :

$$P(Y_t) = \sum_{x \in \{0,1\}} P(X_t = x)P(Y_t|X_t = x)$$

$P(X_t)$ étant la distribution de probabilité de la possibilité de passage du tronçon de trajet associé au bord correspondant et $P(Y_t|X_t)$ étant la probabilité du temps d'arrivée du tronçon de trajet associé au bord correspondant en fonction de la possibilité de passage.

2. Procédé selon la revendication 1, dans lequel, pendant la conduite automatique du véhicule de transport sans conducteur (1) le long des tronçons de trajet déterminés (41 - 47), une stratégie actualisée est calculée en au moins un des points intermédiaires (31 - 35) correspondants à l'heure actuelle et, sur la base des informations attribuées aux bords (51 - 57), pour déterminer le long de quels tronçons de trajet (41 - 47) la conduite automatique la plus rapide possible est autorisée au véhicule de transport sans conducteur (1) depuis le point intermédiaire actuel jusqu'au point de destination (ZP), la stratégie actualisée comprenant des informations sur les heures d'arrivée potentielles calculées aux points intermédiaires (31 - 35) correspondants et au point de destination (ZP), et conduite automatique du véhicule de transport sans conducteur (1) jusqu'au point de destination (ZP) sur la base de la stratégie actualisée.

3. Procédé selon la revendication 1 ou 2, dans lequel la possibilité de passage du tronçon de trajet correspondant (41 - 47) et/ou les informations sur la durée de parcours correspondant ont été déterminées de manière empirique et/ou dans le cadre d'une phase d'apprentissage.

4. Procédé selon la revendication 3, dans lequel la possibilité de passage du tronçon de trajet correspondant (41 - 47) et/ou les informations sur les durées de parcours correspondantes sont automatiquement actualisées pendant la conduite automatique du véhicule de transport sans conducteur (1)

5. Procédé selon l'une des revendications 1 à 4, comprenant la conduite automatique du véhicule de transport sans conducteur (1), notamment commandée par le dispositif de commande (5) du véhicule de transport sans conducteur (1), le long des tronçons de trajet (41 - 47) sur la base d'une carte virtuelle (40) de l'environnement (U).

6. Procédé selon l'une des revendications 1 à 5, dans lequel l'information respective sur le fait de savoir si le tronçon de trajet correspondant (41 - 47) est praticable à un moment donné est réalisée sous la forme d'un processus stochastique décrivant la possibilité de passage du tronçon de trajet correspondant (41 - 47) à des moments donnés, et/ou les informations sur les durées de parcours correspondants sont dans chaque cas réalisées sous la forme d'une distribution de probabilité qui modélise la durée de parcours dont le véhicule de transport sans conducteur (1) devrait avoir besoin en cas de meilleure possibilité de passage du tronçon de trajet (41-47).

7. Véhicule de transport sans conducteur, comprenant un châssis de véhicule (2), plusieurs roues (3) montées de manière rotative par rapport au châssis de véhicule (2) pour déplacer le véhicule de transport sans conducteur (1), au moins un entraînement (4) couplé à au moins une des roues (3) pour entraîner la roue (3) correspondante, et un dispositif de commande (5) couplé audit au moins un entraînement (4), le véhicule de transport sans conducteur (1), commandé par son dispositif de commande (5), est configuré pour se déplacer automatiquement dans un environnement (U) depuis un point de départ (SP) jusqu'à un point de destination (ZP), l'environnement (U) comprenant des points intermédiaires (31 - 35), et les points intermédiaires (31 - 35) étant le point de départ (SP) et le point de destination (ZP), et le dispositif de commande (5) étant configuré pour calculer une stratégie selon le procédé de l'une quelconque des revendications 1 à 6, stratégie selon laquelle le véhicule de transport sans conducteur (1) se déplace automatiquement depuis le point de départ (SP) jusqu'au point de destination (ZP).

8. Système comprenant

- un véhicule de transport sans conducteur (1) comprenant un châssis de véhicule (2), une pluralité de roues (3) montées de manière rotative par rapport au châssis de véhicule (2) pour déplacer le véhicule de transport sans conducteur (1), au moins un entraînement (4) couplé à au moins une des roues (3) pour entraîner la roue correspondante (3), et un dispositif de commande (5) couplé audit au moins un entraînement (4), le véhicule de transport sans conducteur (1) étant adapté pour se déplacer automatiquement dans un environnement (U) depuis un point de départ (SP) jusqu'à un point de destination (ZP) sous la commande de son dispositif de commande (5), l'environnement (U) comprenant des points intermédiaires (31 - 35) et des tronçons de trajet (41 - 47) reliant le point de départ (SP) et le point de destination (ZP), et

- un ordinateur (10) qui est configuré pour déterminer une stratégie selon le procédé de l'une quelconque des revendications 1 à 6, stratégie selon laquelle le véhicule de transport sans conducteur (1) se déplace automatiquement depuis le point de départ (SP) jusqu'au point de destination (ZP), et qui est configuré pour transmettre, notamment sans fil, une information sur la stratégie au véhicule de transport sans conducteur (1).

1

3          2          3

4

7

6      5

4

4

3          3

# FIG. 1

22

1          22

23

24

21

8

10          2

3

# FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2169502 A1
- EP 2172825 A1

- EP 1895720 A1

**In der Beschreibung aufgeführte Nicht-Patentliteratur**

- **P. GRAGLIA et al.** Planning Minimum Time Trajectory in the Traversability Space of a Robot. *Proceedings of the IEEE International Symposium on Intelligent Control, IEEE Computer Soc. Press, Bd. Symp.,* 19. Januar 1987, vol. 2 (1987), 82-87